(19) **Europäisches Patentamt**
**European Patent Office**
**Office européen des brevets**

(11) **EP 2 393 217 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(51) Int Cl.:
*H04B 7/04* *(2017.01)* *H04B 7/06* *(2006.01)*
*H04B 7/08* *(2006.01)*

(21) Anmeldenummer: **10185857.9**

(22) Anmeldetag: **12.08.2003**

(54) **Verfahren zur Kanalschätzung und zugehöriges Funkkommunikationssystem**

Method for channel estimation and wireless communication system

Procédé d'évaluation de canal et système de communication radio correspondant

(84) Benannte Vertragsstaaten:
**AT BE BG CH CY CZ DE DK EE ES FI FR GB GR HU IE IT LI LU MC NL PT RO SE SI SK TR**

(30) Priorität: **13.08.2002 EP 02018096**

(43) Veröffentlichungstag der Anmeldung:
**07.12.2011 Patentblatt 2011/49**

(60) Teilanmeldung:
**18151007.4**

(62) Dokumentnummer(n) der früheren Anmeldung(en) nach Art. 76 EPÜ:
**03747890.6 / 1 529 354**

(73) Patentinhaber: **Nokia Solutions and Networks GmbH & Co. KG**
**81541 Munich (DE)**

(72) Erfinder:
• **Seeger, Alexander**
**85622, Feldkirchen (DE)**
• **Sikora, Marcin**
**Notre Dame, IN, 46556 (US)**

(74) Vertreter: **Weidel, Gottfried et al**
**Nokia Solutions and Networks GmbH & Co. KG**
**CEF T&I IPR Patent Administration**
**80240 Munich (DE)**

(56) Entgegenhaltungen:
**WO-A-00/72464 DE-A- 10 026 077**
**GB-A- 2 313 261**

• **3GPP: "3rd Generation Partnership Project; Technical Specification Group Radio Access Network; Tx diversity solutions for multiple antennas (Release 5)", 3GPP TR25.869 V1.0.0, Juni 2001 (2001-06), Seiten 1-36, XP002228572, France**
• **"UNIVERSAL MOBILE TELECOMMUNICATIONS SYSTEM (UMTS);PHYSICAL LAYER PROCEDURES(FDD) (3GPP TS 25.214 VERSION 3.4.0 RELEASE 1999)", ETSI TS 125 214 V3.4.0, XX, XX, September 2000 (2000-09), Seiten 1-48, XP002166612,**
• **SAMSUNG AND SEOUL NATIONAL UNIVERSITY: "Preliminary Version of Algorithm and Simulation Results for Tx Diversity with more than 2 Tx Antennas", TSG-RAN WORKING GROUP 1 MEETING #14, 4. Juli 2000 (2000-07-04), XP002197993, Finland**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Kanalschätzung in Abwärtsrichtung in einem Funkkommunikationssystem nach dem Oberbegriff des Anspruchs 1.

Ferner betrifft die Erfindung ein Funkkommunikationssystem nach dem Oberbegriff des Anspruchs 15.

In Funk-Kommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen, z.B. Node B's, sowie weitere netzseitige Einrichtungen. Die Teilnehmerstationen und die Basisstationen sind in einem Funkkommunikationssystem über eine Funkschnittstelle miteinander verbunden.

Der Zugriff von Stationen auf die gemeinsamen Funkressourcen des Übertragungsmediums, wie zum Beispiel Zeit, Raum, Frequenz, Leistung wird bei Funk-Kommunikationssystemen durch Vielfachzugriffsverfahren (Multiple Access, MA) geregelt.

Werden einer Teilnehmerstation exklusiv Kanäle zugeteilt, so spricht man von dedizierten Kanälen (dedicated channels). Im Funkkommunikationssystem UMTS(Universal Mobile Telecommunications System) z.B. besteht der Dedicated Physical Channel (DPCH) aus zwei Komponenten, dem DPDCH (Dedicated Physical Data Channel), der die reinen Nutzdaten überträgt, und dem DPCCH (Dedicated Physical Control Channel), der Pilotsequenzen für kohärente Detektion, die Steuerungsbefehle für die schnelle Leistungssteuerung und Rateninformation transportiert.

Nach dem Empfang eines Signals muss die empfangende Station (Teilnehmerstation oder Basisstation) dieses verarbeiten. Hierzu findet eine Kanalschätzung statt, welche die empfangene Intensität des jeweiligen Kanals überprüft. In Hinblick auf stark assymetrische Datenübertragungen, bei welchen die Datenrate in Abwärtsrichtung (downlink), d.h. von Basisstation zur Teilnehmerstation sehr viel größer ist als in der Aufwärtsrichtung (uplink), d.h. von der Teilnehmerstation zur Basisstation, ist insbesondere die Kanalschätzung in Abwärtsrichtung von Interesse.

Zur Kanalschätzung des dedizierten Kanals in Abwärtsrichtung wird üblicherweise ein Common Pilot Channel (CPICH) eingesetzt. Hierbei handelt es sich um einen Kanal, auf welchem eine Pilotsequenz mit hoher Sendeleistung omnidirektional (im Gegensatz zu einer gerichteten Abstrahlung durch strahlformende Antennen) abgestrahlt wird. Eine andere Möglichkeit zur Kanalschätzung des dedizierten Kanals in Abwärtsrichtung besteht darin, Pilotsequenzen von dedizierten Kanälen, z.B. auf dem Dedicated Physical Control Channel (DPCCH), zu verwenden. Dieses Verfahren weist jedoch aufgrund der geringeren Sendeleistung in den dedizierten Kanälen im Vergleich zum Common Pilot Channel eine größere Fehlerwahrscheinlichkeit durch Rauschen auf, verursacht durch den geringeren Wert des Signal-zu-Rausch Verhältnisses (SIR: Signal to Noise Ratio).

Felder von adaptiven Antennen (adaptive antenna array, smart antenna) können eingesetzt werden, um die Ausnutzung der Ressourcen eines Funkkommunikationssystems in Abwärtsrichtung zu erhöhen, da die gegenseitige Störbeeinflussungen der zu verschiedenen Teilnehmerstationen gesendeten Signale reduziert wird. Dies wird durch eine Strahlformung erreicht, d.h. das Signal wird von der Basisstation nicht omnidirektional, sondern räumlich gerichtet ausgestrahlt.

Die Basisstation übermittelt das Signal an die Teilnehmerstation über einen dedizierten Kanal durch jede Einzelantenne des Feldes von adaptiven Antennen. Hierzu wird an jeder Einzelantenne das Signal mit einem antennenspezifischen Faktor multipliziert, so dass sich aus der Summe der von den Einzelantennen gesendeten Signale eine teilnehmerspezifische Strahlform ergibt. Der Vektor, welcher aus den antennenspezifischen Faktoren für eine Teilnehmerstation besteht, wird Gewichtsvektor oder Strahlformungsvektor genannt. Dieser Strahlformungsvektor sollte derart gewählt werden, dass die Teilnehmerstation eine große Signalintensität in Verbindung mit niedrigen Interferenzwerten für alle Teilnehmerstationen empfangen kann. Um eine Zuordnung eines Strahlformungsvektors zu einer Teilnehmerstation durchführen zu können, müssen Werte für die Intensität der Kanäle der Einzelantennen in Abwärtsrichtung in Bezug auf die jeweilige Teilnehmerstation bekannt sein.

Die Werte für die Intensität der Kanäle der Einzelantennen in Abwärtsrichtung in Bezug auf eine Teilnehmerstation können auf verschiedene Arten ermittelt werden. Wenn Reziprozität zwischen den Aufwärts- und den Abwärtskanälen angenommen wird, so kann eine Basisstation Messungen an den Aufwärtskanälen durchführen und die Ergebnisse auf die Abwärtskanäle übertragen. Die erforderliche Reziprozität ist z.B. dann gegeben, wenn ein Funkkommunikationssystem einen Zeitmultiplex (TDD, Time Division Diversity) einsetzt und die betroffene Teilnehmerstation sich nicht schnell bewegt. Bei Verwendung eines Frequenzmultiplex (FDD, Frequency Division Diversity) jedoch ist die Reziprozität zwischen den Aufwärts- und den Abwärtskanälen aufgrund der unterschiedlichen Frequenzen der Aufwärts- und der Abwärtskanäle und der frequenzselektiven Dämpfung nicht gegeben. In diesem Fall ist es nicht sinnvoll, dass die Basisstation die Werte für die Intensität der Kanäle der Einzelantennen in Abwärtsrichtung in Bezug auf eine Teilnehmerstation ermittelt.

Die zweite Art, die Werte für die Intensität der Kanäle der Einzelantennen in Abwärtsrichtung in Bezug auf eine Teilnehmerstation zu ermitteln, besteht darin, dass die Teilnehmerstation selbst die erforderlichen Messungen durchführt. Diese Werte müssen dann von der Teilnehmerstation zur Basisstation in Aufwärtsrichtung übermittelt werden. Aufgrund der begrenzten Ressourcen in Aufwärtsrichtung kann es hierbei zu einer Verzögerung kommen, so dass die Basisstation nicht die aktuell geltenden Werte zur Strahlformung zur Verfügung hat.

Die Auswahl des Strahlformungsvektors kann entweder von der Basisstation oder von der Teilnehmerstation durchgeführt werden. In letzterem Fall wird die Intensität des von der Teilnehmerstation empfangenen Signals maximiert. Ermittelt die Teilnehmerstation einen Strahlformungsvektor, welcher von der Basisstation zur Übertragung von Daten an diese Teilnehmerstation verwendet werden soll, so muss die Teilnehmerstation der Basisstation den ermittelten Strahlformungsvektor übermitteln. Wird dagegen die Auswahl des Strahlformungsvektors von der Basisstation durchgeführt, so ist eine gemeinsame Strahlformung für mehrere Teilnehmerstationen (joint beamforming) möglich. Hierbei wird angestrebt, die Intensität der von den Teilnehmerstationen empfangenen Signale zu maximieren und gleichzeitig die Interferenz zu minimieren.

Die Kanalschätzung in Abwärtsrichtung gestaltet sich bei der Verwendung von adaptiven Antennen schwieriger als bei einer einzigen Antenne. Denn der Kanal, welcher die Pilotsequenzen zur Kanalschätzung beinhaltet, muss in seiner Strahlform bzw. in seiner räumlichen Intensitätsverteilung demjenigen entsprechen, welcher die Nutzdaten enthält, z.B. dem Dedicated Physical Data Channel (DPDCH). Der Einsatz einer Pilotsequenz auf dem dedizierten Kanal für die Kanalschätzung ist wie auch bei der Verwendung einer einzigen Antenne möglich. Hierbei ist keine Kenntnis des Strahlformungsvektors durch die Teilnehmerstation erforderlich. Aufgrund der hohen Fehlerrate dieses Verfahrens ist jedoch die Verwendung des Common Pilot Channels zur Kanalschätzung des dedizierten Kanals wünschenswert. Auch kann bei Verwendung der Pilotsequenz auf dem dedizierten Kanal keine zeitliche Mittelung zur Verbesserung der Ergebnisse eingesetzt werden, da der Strahlformungsvektor mit der Zeit variiert. Bei Verwendung des Common Pilot Channels zur Kanalschätzung hingegen kann eine zeitliche Mittelung durchgeführt werden. Wird ein Feld von adaptiven Antennen eingesetzt, so weist jede Einzelantenne einen eigenen Common Pilot Channel mit einer eigenen Pilotsequenz auf. Um diesen Kanal zur Kanalschätzung für den dedizierten Kanal einsetzen zu können, muss die Teilnehmerstation jedoch Kenntnis des aktuell von der Basisstation für den dedizierten Kanal verwendeten Strahlformungsvektors haben. Somit erfordert die Verwendung des Common Pilot Channels zur Kanalschätzung des dedizierten Kanals eine genaue Synchronisierung zwischen der Teilnehmerstation und der Basisstation hinsichtlich des Strahlformungsvektors.

Der skalare Übertragungskanal für den dedizierten Kanal $h_{DCH}$ ergibt sich als Skalarprodukt aus dem von der Basisstation verwendeten Strahlformungsvektor $\vec{w}$ und dem Vektor der komplexen Kanalübertragungskoeffizienten für jede Einzelantenne

$$\vec{h}_{CPICH}: \quad h_{DCH} = \vec{w} \cdot \vec{h}_{CPICH}.$$

Bezüglich der Kanalschätzung unter Verwendung der Common Pilot Channels der einzelnen Antennen erhält man das Kanalschätzergebnis für den dedizierten Kanal $\hat{h}_{DCH}$ als Skalarprodukt aus dem von der Teilnehmerstation geschätzten Strahlformungsvektor $\hat{\vec{w}}$ und dem Vektor der Kanalschätzwerte pro Antennenelement $\hat{\vec{h}}_{CPICH}$ unter Verwendung der Common Pilot Channels: $\hat{h}_{DCH} = \hat{\vec{w}} \cdot \hat{\vec{h}}_{CPICH}.$ Während dieses Kanalschätzergebnis wegen der großen Leistung der Common Pilot Channels sehr zuverlässig ist, wird diese Zuverlässigkeit dadurch, dass es sich bei dem zur Kanalschätzung verwendeten Strahlformungsvektor um einen geschätzten Wert handelt, reduziert. Der Wert $\hat{\vec{w}}$ ist deshalb ein geschätzter, weil die Teilnehmerstation ohne exakte Kenntnis davon ausgehen muss, dass dieser Wert tatsächlich von der Basisstation verwendet wurde. Daher ist die genaue Kenntnis der Teilnehmerstation von dem tatsächlich verwendeten Strahlformungsvektor für eine effiziente Kanalschätzung von großem Interesse. DE10026077 offenbart ein Strahlformungsverfahren, wobei bei den gespeicherten Eigenvektoren, der mit dem größten Wert ermittelte Eigenvektor oder eine lineare Kombination der Eigenvektoren der Basisstation übertragen werden. Aufgrund gravierender Nachteile, welche die Auswahl des Strahlformungsvektors mit Hilfe von Messungen an Aufwärtskanälen mit sich bringt, wird eine Auswahl des Strahlformungsvektors mit Hilfe von Messungen an Abwärtskanälen favorisiert, wie in dem 3GGP Report [3GGP TR 25.869 v1.0.0(2001-06), Tx diversity solutions for multiple antennas (Release 5)] dargestellt. Hierbei findet sowohl die Bestimmung der Werte für die Intensität der Kanäle der Einzelantennen in Abwärtsrichtung in Bezug auf eine Teilnehmerstation, als auch die Ermittlung des geeigneten Strahlformungsvektors in der jeweiligen Teilnehmerstation statt. Dieser Strahlformungsvektor wird dann der Basisstation übermittelt. Diese Übermittlung kann peu a peu in einzelnen Informationsstücken abgewickelt werden. Um die Synchronisierung zwischen der Teilnehmerstation und der Basisstation hinsichtlich des Strahlformungsvektors aufrecht zu erhalten, muss die Basisstation den ihr von der Teilnehmerstation übermittelten Strahlformungsvektor zur Übertragung der Signale auf dem dedizierten Kanal verwenden. Da die Teilnehmerstation somit Kenntnis des aktuell verwendeten Strahlformungsvektors hat, kann die Kanalschätzung in Abwärtsrichtung unter Verwendung des Common Pilot Channels erfolgen.

Problematisch an dieser Vorgehensweise ist, dass die Synchronisierung zerstört wird, wenn Übertragungsfehler bei der Übermittlung des von der Teilnehmerstation ermittelten Strahlformungsvektors an die Basisstation auftreten. Um dieses Problem zu umgehen, wird beispielsweise in der 3GGP Spezifikation [3GGP TS 25.214 V.3.4.0. Release 99. September 2000] vorgeschlagen, eine Strahlformungsvektor-Verifizierungs-Prozedur durchzuführen. Hierzu werden als mögliche Hypothesen eine korrekte und eine fehlerbehaftete Übertragung des von der Teilnehmerstation ermittelten Strahlformungsvektors an die Basisstation in Betracht gezogen. Für beide Alternativen wird das Ergebnis der Kanalschätzung, welches auf der Verwendung des Common Pilot Channel basiert, bestimmt. Diese Ergebnisse werden dann im Rahmen einer Maximum a Posteriori Betrachtung verglichen mit dem Ergebnis der Kanalschätzung, welches auf der Verwendung des dedizierten Kanals basiert. Somit kann eine Entscheidung getroffen werden, welcher Strahlformungsvektor von der Basisstation verwendet wurde. Der so ermittelte Wert für den Strahlformungsvektor wird dann zur Kanalschätzung mit Hilfe des Common Pilot Channels eingesetzt.

Der Nachteil dieses Verfahrens liegt darin begründet, dass es nur dann zuverlässige Ergebnisse liefert, wenn die mit den beiden Hypothesen ermittelten Werte sich deutlich unterscheiden. In der Regel wird nur eine diskrete Anzahl an Strahlformungsvektoren zugelassen. Je größer diese Anzahl wird, desto geringer sind die Unterschiede zwischen den einzelnen Strahlformungsvektoren. Die beschriebene Strahlformungsvektor-Verifizierungs-Prozedur schränkt daher die Anzahl an zugelassenen Strahlformungsvektoren ein, was zu einer Verringerung der Leistungsfähigkeit des Systems führt.

Ein weiterer Nachteil dieses Verfahrens ist darin zu sehen, dass ausschließlich diejenigen Übertragungsfehler detektiert werden können, welche sich direkt auf in Aufwärtsrichtung gesendete Informationen, welche den aktuell verwendeten Strahlformungsvektor betreffen, beziehen. In weiter fortgeschrittenen Verfahren zur Kanalschätzung hingegen ist es erforderlich, andere Informationen, wie z.B. die Geschwindigkeit einer Teilnehmerstation, von der jeweiligen Teilnehmerstation an die Basisstation zu übermitteln und die korrekte Übertragung auch dieser Information zu verifizieren.

Der Erfindung liegt die Aufgabe zugrunde, ein Verfahren zur Kanalschätzung in Abwärtsrichtung der eingangs genannten Art und ein zugehöriges Funkkommunikationssystem der eingangs genannten Art bei dem Einsatz eines Feldes von adaptiven Antennen zur Strahlformung aufzuzeigen, die eine effektive Kanalschätzung ermöglichen.

Diese Aufgabe wird hinsichtlich des Verfahrens durch ein Verfahren mit den Merkmalen des Anspruchs 1 gelöst.

Ausgestaltungen und Weiterbildungen sind Gegenstand der Unteransprüche.

Erfindungsgemäß übermittelt die mindestens eine Basisstation der mindestens einen Teilnehmerstation Information über den für die Verbindung von der mindestens einen Basisstation zu der mindestens einen Teilnehmerstation verwendeten Strahlformungsvektor, auf deren Grundlage die mindestens eine Teilnehmerstation eine Kanalschätzung durchführt.

Die Information über den für die Verbindung verwendeten Strahlformungsvektor kann verschieden ausgestaltet sein. Z.B. kann sie den Strahlformungsvektor direkt betreffen, d.h. seinen "Wert" übermitteln, oder ihn auch nur indirekt betreffen. Ein Beispiel für Information, welche den Strahlformungsvektor nur indirekt betrifft, ist Information über ein zur Verfügung stehendes Set an Strahlformungsvektoren. Dies kann z.B. einem Update unterworfen werden, d.h. mit der Zeit variieren. Es ist auch möglich, dass sie nur einen Teil des Strahlformungsvektors betrifft, z.B. den von einer Antenne verwendeten antennenspezifischen Faktor. Die Information über den für die Verbindung verwendeten Strahlformungsvektor kann inhaltlich auch an der Strahlformungsvektoren betreffenden Information, welche die mindestens eine Teilnehmerstation an die mindestens eine Basisstation übermittelt hat, angelehnt sein.

Vorteile des erfindungsgemäßen Verfahrens liegen darin,

- dass negative Folgen von Übertragungsfehlern, welche bei der Übertragung von Information über den Strahlformungsvektor in Aufwärtsrichtung auftreten können, behoben werden können,
- dass die Möglichkeit besteht, den Common Pilot Channel effektiv zur Kanalschätzung einzusetzen,
- dass keine Begrenzung der Anzahl an möglichen Strahlformungsvektoren nötig ist,
- dass im Vergleich zur herkömmlichen Signalverarbeitung in der Teilnehmerstation kein signifikanter Mehraufwand für die Durchführung des erfindungsgemäßen Verfahrens nötig ist,
- und dass auch diejenigen Übertragungsfehler berücksichtigt werden können, welche bei der Übertragung von den Strahlformungsvektor nur indirekt oder langfristig beeinflussenden Informationen auftreten.

In einer Weiterbildung der Erfindung umfasst die Information über den für die Verbindung von der mindestens einen Basisstation zu der mindestens einen Teilnehmerstation verwendeten Strahlformungsvektor Information über den aktuell für die Verbindung von der mindestens einen Basisstation zu der mindestens einen Teilnehmerstation verwendeten Strahlformungsvektor. In diesem Fall teilt die Basisstation der Teilnehmerstation also zumindest teilweise mit, welchen Strahlformungsvektor sie aktuell anwendet. Dies erweist sich in direkter Weise als vorteilhaft für die Kanalschätzung, da diese auf dem aktuell verwendeten Strahlformungsvektor beruhen kann. Im allgemeinen ist es auch möglich, dass die Basisstation Information über einen zukünftig eventuell zu verwendenden Strahlformungsvektor an die Teilnehmerstation übermittelt. Diese Information kann in aufwendigere Kanalschätzverfahren integriert werden.

Mit Vorteil kann die Information, welche von der mindestens einen Teilnehmerstation der mindestens einen Basisstation übermittelt wird, die zeitliche Entwicklung des mindestens einen Strahlformungsvektors betreffende Information umfassen. In der Regel wird ein fixes Set an möglichen Strahlformungsvektoren verwendet, z.B. vier Stück. Die Teilnehmerstation ermittelt dann einen von diesen vier Strahlformungsvektoren. Es ist jedoch auch möglich, dass dieses Set nicht fix ist, sondern an die räumliche Situation des Teilnehmerstation angepasst wird. Während sich der aktuell zu verwendende Strahlformungsvektor in der Regel schnell verändert, unterliegt das Set an Strahlformungsvektoren langsameren Änderungen mit der Zeit. Ein Beispiel für Information, welche die zeitliche Entwicklung eines Strahlformungsvektors betrifft, wäre ein Update des Sets an Strahlformungsvektoren. Dieses Update wirkt erst mit Verzögerung auf den aktuell verwendeten Strahlformungsvektor.

In Ausgestaltung der Erfindung umfasst die Information über den für die Verbindung von der mindestens einen Basisstation zu der mindestens einen Teilnehmerstation verwendeten Strahlformungsvektor eine von der mindestens einen Basisstation aus einer Anzahl von Pilotsequenzen ausgewählte Pilotsequenz eines dedizierten Kanals. Dies beinhaltet, dass die zur Verfügung stehenden Pilotsequenzen inhaltlich an Strahlformungsvektoren angekoppelt sind. Somit kann durch die Auswahl und das Übermitteln einer Pilotsequenz Information über einen Strahlformungsvektor übermittelt werden.

Vorzugsweise kann die Anzahl von Pilotsequenzen zwei gegenphasige Sequenzen umfassen. Eine derartige Auswahl an Sequenzen vereinfacht die Durchführung des Verfahrens merklich.

In einer bevorzugten Ausführungsform der Erfindung erfolgt die Kanalschätzung in Abwärtsrichtung durch die mindestens eine Teilnehmerstation unter Verwendung von mindestens einem von der mindestens einen Basisstation omnidirektional abgestrahlten Kanal. Ein Beispiel für einen derartigen omnidirektional abgestrahlten Kanal stellt ein Common Pilot Channel dar. Der Begriff "omnidirektional" beinhaltet hierbei nicht ausschließlich die exakt räumlich homogene Abstrahlung, sondern beschreibt vielmehr diejenigen Kanäle, welche nicht durch die Verwendung einer Vielzahl von Antennen mit entsprechenden Strahlformungsvektoren räumlich gerichtet abgestrahlt werden. Dadurch, dass die Teilnehmerstation von der Basisstation Information über den verwendeten Strahlformungsvektor erhält, ist sie in der Lage, die Kanalschätzung unter Verwendung eines omnidirektional abgestrahlten Kanals durchzuführen, welcher nicht die gleiche räumliche Strahlungscharakteristik aufweist wie der strahlgeformte dedizierte Kanal.

In Weiterbildung der Erfindung entnimmt die mindestens eine Teilnehmerstation nach dem Empfangen der Information über den für die Verbindung von der mindestens einen Basisstation zu der mindestens einen Teilnehmerstation verwendeten Strahlformungsvektor aus dieser Information einen für die Kanalschätzung in Abwärtsrichtung verwendeten Strahlformungsvektor. Die Teilnehmerstation kann also aus der von der Basisstation gesendeten Information auf direkte Weise einen Strahlformungsvektor ablesen, den sie für die Kanalschätzung verwendet.

In einer anderen Weiterbildung der Erfindung führt die mindestens eine Teilnehmerstation nach dem Empfangen der Information über den für die Verbindung von der mindestens einen Basisstation zu der mindestens einen Teilnehmerstation verwendeten Strahlformungsvektor unter Verwendung dieser Information Berechnungen zur Verifikation des Strahlformungsvektors durch. Ein Beispiel für eine derartige Berechnung ist die oben beschriebene Strahlformungsvektor-Verifizierungs-Prozedur mit einer a Posteriori Betrachtung. Es sind jedoch auch andere Berechnungen zur Verifikation des Strahlformungsvektors geeignet. Das Ergebnis dieser Berechnungen kann dann von der Teilnehmerstation zur Kanalschätzung herangezogen werden.

Besonders vorteilhaft ist eine derartige Strahlformungsvektor-Verifizierungs-Prozedur in Kombination mit der Verwendung einer Anzahl von Pilotsequenzen. Während bei herkömmlichen Strahlformungsvektor-Verifizierungs-Prozeduren die Qualität der Ergebnisse mit der Anzahl möglicher Strahlformungsvektoren sinkt, ist dies bei dem erfindungsgemäßen Verfahren nicht der Fall. Somit kann beim Einsatz des erfindungsgemäßen Verfahrens eine feinere Quantisierung der Strahlformungsvektoren verwendet werden. Dies erhöht die Effizienz der Nutzung der Funkressourcen.

Mit Vorteil kann die Information über den mindestens einen von der mindestens einen Teilnehmerstation ermittelten Strahlformungsvektor als einzelne Bits von dieser übermittelt werden. Die Information über den Strahlformungsvektor wird also vor dem Senden in einzelne Bits aufgeteilt. Bei Verwendung von Zeitschlitzen kann dann z.B. pro geeignetem oder hierfür bereit gestelltem Zeitschlitz ein Bit an Information über den Strahlformungsvektor übermittelt werden. Die Information betrifft dann in der Regel nur einen Teil des Strahlformungsvektors.

Vorteilhafterweise wird die Information über den für die Verbindung von der mindestens einen Basisstation zu der mindestens einen Teilnehmerstation verwendeten Strahlformungsvektor als einzelne Bits von der mindestens einen Basisstation übermittelt. Wird die Information über den mindestens einen von der mindestens einen Teilnehmerstation ermittelten Strahlformungsvektor als einzelne Bits von dieser übermittelt, so ist es günstig, dass die Information über den für die Verbindung von der mindestens einen Basisstation zu der mindestens einen Teilnehmerstation verwendeten Strahlformungsvektor mit der selben Taktrate übermittelt wird. Steht für die Information über den für die Verbindung von der mindestens einen Basisstation zu der mindestens einen Teilnehmerstation verwendeten Strahlformungsvektor in Abwärtsrichtung eine größere Kapazität an Funkressourcen zur Verfügung als für die Information über den mindestens einen von der mindestens einen Teilnehmerstation ermittelten Strahlformungsvektor in Aufwärtsrichtung, so kann diese Kapazität im Rahmen von Fehlerschutzmaßnahmen eingesetzt werden.

Gemäß einer bevorzugten Ausführungsform verifiziert die Information über den für die Verbindung von der mindestens einen Basisstation zu der mindestens einen Teilnehmerstation verwendeten Strahlformungsvektor die fehlerfreie Übertragung der von der mindestens einen Teilnehmerstation an die mindestens eine Basisstation übermittelten Strahlformungsvektoren betreffenden Information. Die von der Basisstation an die Teilnehmerstation übermittelte Information ist also derartig ausgestaltet, dass sie es erlaubt, ihr zu entnehmen, ob die Information, welche die Teilnehmerstation an die Basisstation gesendet hat, ohne gravierenden Übertragungsfehler übertragen wurde. Dies bedeutet, dass die Basisinformation nach der Übertragung fehlerfrei vorliegen soll. Dies schließt nicht aus, dass die redundante Information, welche zur Codierung der Basisinformation erzeugt wurde, fehlerbehaftet ist. Gegenstand der Verifizierung kann jegliche Information sein, welche von der Teilnehmerstation übermittelt wurde, wenn sie einen Strahlformungsvektor betrifft.

In einer Ausgestaltung der Erfindung indiziert die Information über den für die Verbindung von der mindestens einen Basisstation zu der mindestens einen Teilnehmerstation verwendeten Strahlformungsvektor eine Bestätigung eines des mindestens einen von der mindestens einen Teilnehmerstation ermittelten Strahlformungsvektors als aktuell für die Verbindung von der mindestens einen Basisstation zu der mindestens einen Teilnehmerstation verwendeten Strahlformungsvektor. Die Basisstation akzeptiert und verwendet also einen von der Teilnehmerstation ermittelten Strahlformungsvektor und teilt dies der Teilnehmerstation mit.

In einer Weiterbildung der Erfindung indiziert die Information über den für die Verbindung von der mindestens einen Basisstation zu der mindestens einen Teilnehmerstation verwendeten Strahlformungsvektor eine Ablehnung von mindestens einem des mindestens einen von der mindestens einen Teilnehmerstation ermittelten Strahlformungsvektor als aktuell für die Verbindung von der mindestens einen Basisstation zu der mindestens einen Teilnehmerstation verwendeten Strahlformungsvektor. Die Basisstation lehnt also mindestens einen von der Teilnehmerstation ermittelten Strahlformungsvektor ab, verwendet diesen also nicht, und teilt dies der Teilnehmerstation mit.

Vorteilhafterweise wird das erfindungsgemäße Verfahren in Verbindung mit einem Verfahren in der mindestens einen Basisstation zur gemeinsamen Strahlformung für mehrere Teilnehmerstationen eingesetzt. Hierbei liegt die Entscheidung darüber, welcher Strahlformungsvektor verwendet wird, bei der Basisstation. Somit kann diese die Entscheidung über den Strahlformungsvektor zugunsten einer Vielzahl von Teilnehmerstationen treffen.

Gemäß einer vorteilhaften Ausgestaltung wird das erfindungemäße Verfahren in einem CDMA Kommunikationssystem eingesetzt. Hierbei kann die Verwendung von Codes kombiniert sein mit anderen Separierungsverfahren, z.B. einem Zeit- oder einem Frequenzmultiplex.

In Hinblick auf das Funkkommunikationssystem wird die oben genannte Aufgabe durch ein Funkkommunikationssystem mit den Merkmalen des Anspruchs 15 gelöst.

Erfindungsgemäß weist die mindestens eine Basisstation Einrichtungen zum Übermitteln von Information über den für die Verbindung zwischen der mindestens einen Teilnehmerstation und der mindestens einen Basisstation verwendeten Strahlformungsvektor an die mindestens eine Teilnehmerstation auf, und die mindestens eine Teilnehmerstation weist Einrichtungen zur Durchführung von Kanalschätzung unter Verwendung der von der mindestens einen Basisstation übermittelten Information auf. Mittel und Einrichtungen zur Durchführung der Verfahrensschritte gemäß den Ausgestaltungen und Weiterbildungen der Erfindung können vorgesehen sein.

Einzelheiten und Details der Erfindung werden anhand eines Ausführungsbeispiels im folgenden erläutert. Dabei zeigt

Figur 1     ein erstes Ablaufdiagramme des erfindungsgemäßen Verfahrens in Bezug auf den Strahlformungsvektor in Mobil- und Basisstation,

Figur 2     ein zweites Ablaufdiagramme des erfindungsgemäßen Verfahrens in Bezug auf den Strahlformungsvektor in Mobil- und Basisstation,

Das Ausführungsbeispiel bezieht sich auf ein WCDMA-System. WCDMA ist ein Zugangsverfahren für die Mobilfunkkommunikations im Rahmen von UMTS. Es beruht auf der Verwendung von mindestens zwei 5 MHz Frequenzbändern für die Übertragung in Aufwärtssowie in Abwärtsrichtung (FDD Technologie).

Im betrachteten Funkkommunikationssystem findet die Kommunikation zwischen einer Basisstation und einer Mobilstation, welche über eine Luftschnittstelle verbunden sind, statt. Die Basisstation weist mehrere Antennen auf, so dass eine Strahlformung zur Übermittlung von Signalen in Abwärtsrichtung durchgeführt wird. Der Strahlformung unterliegt der dedizierte Kanal, welcher aus dem Dedicated Physical Data Channel (DPDCH) und dem Dedicated Physical Control Channel (DPCCH) besteht.

Die Mobilstation ermittelt die Werte für die Intensität der Kanäle der Einzelantennen in Abwärtsrichtung. Aufgrund dieser Messungen entscheidet sie sich für einen Strahlformungsvektor, welcher geeignet ist, den Empfangspegel der an sie adressierten Signale zu maximieren. Hierfür steht eine diskrete Anzahl von Strahlformungsvektoren zur Verfügung. Im betrachteten Beispiel soll der einfache Fall betrachtet werden, dass nur zwei Strahlformungsvektoren zur Verfügung stehen. Zur Übertragung des ermittelten Strahlformungsvektors stehen im WCDMA-System in jedem Aufwärts-Zeitschlitz ein Bit zur Verfügung. Somit übermittelt die Mobilstation jeweils 1 Bit des Strahlformungsvektors an die Basisstation.

Die Basisstation empfängt in jedem Zeitschlitz ein Bit an Information über den von der Mobilstation gewünschten Strahlformungsvektor. Die Basisstation kann diesem Wunsch entweder Genüge leisten und den Strahlformungsvektor für die Übertragung von Signalen auf dem dedizierten Kanal entsprechend einstellen. Es ist aber auch möglich, dass die Basisstation einen anderen Strahlformungsvektor für die Mobilstation wählt. Dies könnte z.B. dadurch begründet sein, dass die Basisstation gemeinsame Strahlformung für mehrere Mobilstationen durchführt. In diesem Fall kann es zur Minimierung der Interferenz günstiger sein, einen anderen als den von der Mobilstation ermittelten Strahlformungsvektor einzusetzen.

Um eine hohe Qualität der in der Mobilstation durchzuführenden Kanalschätzung für den dedizierten Kanal zu gewährleisten, wird der Common Pilot Channel zur Kanalschätzung eingesetzt. Hierzu muss der Mobilstation bekannt sein, welchen Strahlformungsvektor die Basisstation für die Übertragung von Signalen auf dem dedizierten Kanal verwendet hat. Dieser könnte sich von dem "Wunschkandidaten" der Mobilstation dann unterscheiden, wenn bei der Übertragung desselben von der Mobilstation zur Basisstation ein Fehler aufgetreten ist, oder wenn sich die Basisstation entschieden hat, einen anderen Strahlformungsvektor zu verwenden.

Um die Mobilstation zu informieren, welchen Strahlformungsvektor die Basisstation verwendet hat, werden zwei gegenphasige Pilotsequenzen auf dem Dedicated Physical Control Channel verwendet. Im Gegensatz zu denjenigen Pilotsequenzen des dedizierten Kanals, welche zur Kanalschätzung eingesetzt werden, und somit fix sind, handelt es sich bei den zur Ermittlung des verwendeten Strahlformungsvektors eingesetzten Pilotsequenzen um variable Sequenzen. Diese Sequenzen sind inhaltlich an die beiden möglichen Strahlformungsvektoren gekoppelt. D.h. abhängig von dem verwendeten Strahlformungsvektor wird eine der beiden möglichen Pilotsequenzen übermittelt.

In der Regel handelt es sich bei den Pilotsequenzen der dedizierten Kanäle um Sequenzen der Länge 4 Bit. Da zur Übertragung des von der Mobilstation ermittelten Strahlformungsvektors zur Basisstation im WCDMA-System in jedem Aufwärts-Zeitschlitz 1 Bit zur Verfügung steht, ist es ausreichend, zur Ermittlung des verwendeten Strahlformungsvektors eine Pilotsequenz der Länge 1 Bit zu senden. Da die Pilotsequenzen der dedizierten Kanäle eine Länge von 4 Bit aufweisen, kann eine Codierung der 1 Bit langen Pilotsequenz eingesetzt werden.

Im einfachsten Fall entnimmt die Mobilstation der 1 Bit langen Pilotsequenz direkt den verwendeten Strahlformungsvektor. Da die Mobilstation der Basisstation 1 Bit an Information über den von ihr erwünschten Strahlformungsvektor gesendet hat, kann die Übermittlung der ersten der beiden möglichen Pilotsequenzen bedeuten, dass dieses Bit an Information über den erwünschten Strahlformungsvektor von der Basisstation entsprechend umgesetzt wurde, die Übermittlung der zweiten Pilotsequenz hingegen, dass der andere mögliche Strahlformungsvektor von der Basisstation gewählt wurde.

Es ist jedoch auch möglich, dass die Mobilstation den verwendeten Strahlformungsvektor nicht direkt aus der Trainingssequenz entnimmt, sondern Berechnungen zur Verifikation des Strahlformungsvektors, z.B. in Form einer a Posteriori Wahrscheinlichkeitsbetrachtung, durchführt. Dies ist von Interesse in Zusammenhang mit Übertragungsfehlern bei der Aufwärts-Übermittlung des erwünschten Strahlformungsvektors.

Mit Kenntnis des von der Basisstation verwendeten Strahlformungsvektors kann die Mobilstation dann eine Kanalschätzung des dedizierten Kanals unter Verwendung der Pilotsequenzen des Common Pilot Channels durchführen.

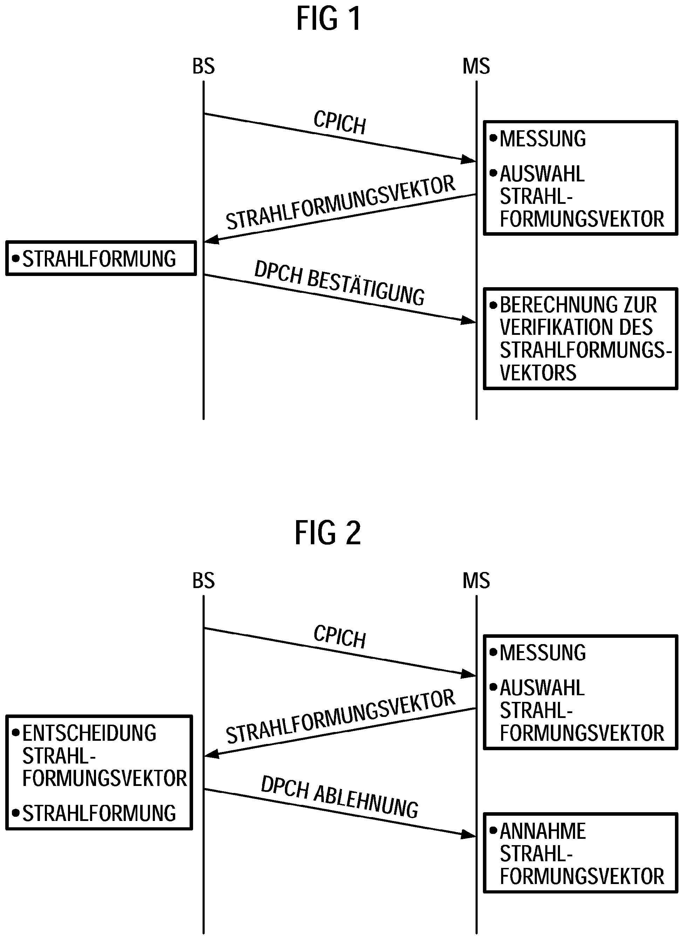

In Figur 1 ist der zeitliche Verfahrensablauf zwischen der Basisstation BS und der Mobilstation MS für den Fall dargestellt, dass die Basisstation BS den von der Mobilstation MS gewünschten Strahlformungsvektor zur Übermittlung von Signalen auf dem dedizierten Kanal verwendet. In diesem einfachen Fall kann die Informationsübermittlung durch die Pilotsequenzen des dedizierten Kanals dazu verwendet werden, eine effektivere Strahlformungsvektor-Verifizierungs-Prozedur durchzuführen. Jeder Pfeil in der Figur steht für die Informationsübertragung von der Basisstation BS zur Mobilstation MS oder umgekehrt. Aufgrund der Pilotsequenzen CPICH des Common Pilot Channels führt die Mobilstation MS Messungen der Intensitäten der Kanäle der Einzelantennen in Abwärtsrichtung durch ("MESSUNG") und wählt einen der möglichen Strahlformungsvektoren aus ("AUSWAHL STRAHLFORMUNGSVEKTOR"). Dieser wird in Aufwärtsrichtung an die Basisstation BS übermittelt ("STRAHLFORMUNGSVEKTOR"). Die Basisstation BS führt dann die Strahlformung entsprechend dem von der MS gewünschten Strahlformungsvektor durch ("STRAHLFORMUNG"). Sie sendet die entsprechende Pilotsequenz auf dem dedizierten Kontrollkanal ("DPCH BESTÄTIGUNG"), was der Übermittlung eines "Echos" entspricht. Die Mobilstation erkennt dies und führt daraufhin eine Berechnung zur Verifikation des Strahlformungsvektors durch ("BERECHNUNG ZUR VERIFIKATION DES STRAHLFORMUNGSVEKTORS"), z.B. in Form einer Maximum a Posteriori Wahrscheinlichkeitsbetrachtung.

In Figur 2 ist der zeitliche Verfahrensablauf zwischen der Basisstation BS und der Mobilstation MS für den Fall dargestellt, dass die Basisstation BS einen anderen als den von der Mobilstation MS gewünschten Strahlformungsvektor zur Übermittlung von Signalen auf dem dedizierten Kanal verwendet. Die ersten Schritte in Figur 2 entsprechen denen der Figur 1: Aufgrund der Pilotsequenzen CPICH des Common Pilot Channel führt die Mobilstation MS die entsprechenden Messungen durch ("MESSUNG")und wählt einen der möglichen Strahlformungsvektoren aus ("AUSWAHL STRAHLFORMUNGSVEKTOR"). Dieser wird in Aufwärtsrichtung an die Basisstation BS übermittelt ("STRAHLFORMUNGSVEKTOR"). Die Basisstation BS kommt zu dem Ergebnis, dass es vorteilhafter ist, einen anderen als den von der Mobilstation MS gewünschten Strahlformungsvektor für die Verbindung zur Mobilstation MS zu verwenden ("ENTSCHEIDUNG STRAHLFORMUNGSVEKTOR"). Daher führt sie die Strahlformung mit diesem anderen Strahlformungsvektor durch ("STRAHLFORMUNG"). Sie sendet die entsprechende Pilotsequenz auf dem dedizierten Kontrollkanal ("DPCH ABLEHNUNG"). Die Mobilstation MS erkennt dies und verwendet den anderen, nicht von ihr gewünschten Strahlformungsvektor zur Kanalschätzung ("ANNAHME STRAHLFORMUNGSVEKTOR").

**Patentansprüche**

1. Verfahren zur Kanalschätzung in Abwärtsrichtung in einem Funkkommunikationssystem, umfassend mindestens eine Basisstation (BS) und mindestens eine Teilnehmerstation (MS), zwischen denen eine Verbindung über eine Funkschnittstelle besteht, wobei mindestens ein zur Strahlformung in Abwärtsrichtung der Verbindung zu verwendender Strahlformungsvektor von der mindestens einen Teilnehmerstation (MS) ermittelt wird und von der mindestens einen Teilnehmerstation (MS) Information, welche Information über diesen mindestens einen zu verwendenden Strahlformungsvektor umfasst, der mindestens einen Basisstation (BS) übermittelt wird, **dadurch gekennzeichnet, dass** die mindestens eine Teilnehmerstation (MS) anschließend von der mindestens einen Basisstation (BS) Information empfängt über den zur Strahlformung in Abwärtsrichtung der Verbindung verwendeten Strahlformungsvektor, wobei die Information über den verwendeten Strahlformungsvektor zur Durchführung einer Kanalschätzung durch die mindestens eine Teilnehmerstation (MS) verwendbar ist.

2. Verfahren nach Anspruch 1, **dadurch gekennzeichnet, dass** die Information über den in Abwärtsrichtung der Verbindung verwendeten Strahlformungsvektor Information über den aktuell in Abwärtsrichtung der Verbindung verwendeten Strahlformungsvektor umfasst.

3. Verfahren nach Anspruch 1 oder 2, **dadurch gekennzeichnet, dass** die Information, welche von der mindestens einen Teilnehmerstation (MS) der mindestens einen Basisstation (BS) übermittelt wird, die zeitliche Entwicklung des mindestens einen zu verwendenden Strahlformungsvektors betreffende Information umfasst.

4. Verfahren nach einem der Ansprüche 1 bis 3, **dadurch gekennzeichnet, dass** die Information über den in Abwärtsrichtung der Verbindung verwendeten Strahlformungsvektor eine von der mindestens einen Basisstation (BS) aus einer Anzahl von Pilotsequenzen ausgewählte Pilotsequenz eines dedizierten Kanals umfasst.

5. Verfahren nach Anspruch 4, **dadurch gekennzeichnet, dass** die Anzahl von Pilotsequenzen zwei gegenphasige Sequenzen umfasst.

6. Verfahren nach einem der Ansprühe 1 bis 5, **dadurch gekennzeichnet, dass** die Kanalschätzung durch die mindestens eine Teilnehmerstation (MS) unter Verwendung von mindestens einem von der mindestens einen Basisstation (BS) omnidirektional abgestrahlten Kanal erfolgt.

7. Verfahren nach einem der Ansprüche 1 bis 6, **dadurch gekennzeichnet, dass** die mindestens eine Teilnehmerstation (MS) nach dem Empfangen der Information über den zur Strahlformung in Abwärtsrichtung der Verbindung verwendeten Strahlmungsvektor aus dieser Information einen für die Kanalschätzung in Abwärtsrichtung der Verbindung verwendeten Strahlformungsvektor entnimmt.

8. Verfahren nach einem der Ansprüche 1 bis 7 **dadurch gekennzeichnet, dass** die mindestens eine Teilnehmerstation (MS) nach dem Empfangen der Information über den zur Strahlformung in Abwärtsrichtung der Verbindung verwendeten Strahlmungsvektor unter Verwendung dieser Information Berechnungen zur Verifikation des verwendeten Strahlformungsvektors durchführt.

9. Verfahren nach einem der Ansprüche 1 bis 8 **dadurch gekennzeichnet, dass** die Information über den mindestens einen von der mindestens einen Teilnehmerstation (MS) ermittelten zur Strahlformung in Abwärtsrichtung der Verbindung zu verwendenden Strahlformungsvektor als einzelne Bits von dieser übermittelt wird.

10. Verfahren nach einem der Ansprüche 1 bis 9, **da-**

**durch gekennzeichnet, dass** die Information über den zur Strahlformung in Abwärtsrichtung der Verbindung verwendeten Strahlformungsvektor als einzelne Bits von der mindestens einen Basisstation (BS) empfangen wird.

11. Verfahren nach einem der Ansprüche 1 bis 10, **dadurch gekennzeichnet, dass** die Information über den zur Strahlformung in Abwärtsrichtung der Verbindung verwendeten Strahlformungsvektor die fehlerfreie Übertragung der von der mindestens einen Teilnehmerstation (MS) an die mindestens eine Basisstation (BS) übermittelten zu verwendenden Strahlformungsvektoren betreffenden Information verifiziert.

12. Verfahren nach einem der Ansprüche 2 bis 11, **dadurch gekennzeichnet, dass** die Information über den zur Strahlformung in Abwärtsrichtung der Verbindung verwendeten Strahlformungsvektor eine Bestätigung eines des mindestens einen von der mindestens einen Teilnehmerstation (MS) übermittelten zu verwendenden Strahlformungsvektors als aktuell zur Strahlformung in Abwärtsrichtung der Verbindung verwendeten Strahlformungsvektor indiziert.

13. Verfahren nach einem der Ansprüche 2 bis 12, **dadurch gekennzeichnet, dass** die Information über den zur Strahlformung in Abwärtsrichtung der Verbindung verwendeten Strahlformungsvektor eine Ablehnung von mindestens einem des mindestens einen von der mindestens einen Teilnehmerstation (MS) übermittelten zu verwendenden Strahlformungsvektor als aktuell zur Strahlformung in Abwärtsrichtung der Verbindung verwendeten Strahlformungsvektor indiziert.

14. Verfahren nach einem der Ansprüche 1 bis 13, **dadurch gekennzeichnet, dass** es in einem CDMA Kommunikationssystem eingesetzt wird.

15. Funkkommunikationssystem, umfassend mindestens eine Basisstation (BS) und mindestens eine Teilnehmerstation (MS), zwischen denen eine Verbindung über eine Funkschnittstelle besteht, wobei die mindestens eine Basisstation (BS) mehrere Antennen zur Strahlformung in Abwärtsrichtung der Verbindung aufweist, und wobei die mindestens eine Teilnehmerstation (MS) Mittel zum Ermitteln von mindestens einem zur Strahlformung in Abwärtsrichtung der Verbindung zu verwendenden Strahlformungsvektor und Mittel zum Übermitteln von Information, welche Information über diesen mindestens einen zu verwendenden Strahlformungsvektor umfasst, aufweist, **dadurch gekennzeichnet, dass** die mindestens eine Basisstation (BS) Einrichtungen zum anschließenden Übermitteln von Information über den zur Strahlformung in Abwärtsrichtung der Verbindung verwendeten Strahlformungsvektor an die mindestens eine Teilnehmerstation (MS) aufweist, und **dass** die mindestens eine Teilnehmerstation (MS) Einrichtungen zur Durchführung einer Kanalschätzung unter Verwendung der von der mindestens einen Basisstation (BS) übermittelten Information aufweist.

16. Funkkommunikationssystem nach Anspruch 15, wobei die Information über den in Abwärtsrichtung der Verbindung verwendeten Strahlformungsvektor Information über den aktuell in Abwärtsrichtung der Verbindung verwendeten Strahlformungsvektor umfasst.

17. Funkkommunikationssystem nach Anspruch 16, wobei die Information über den zur Strahlformung in Abwärtsrichtung der Verbindung verwendeten Strahlformungsvektor eine Bestätigung eines des mindestens einen von der mindestens einen Teilnehmerstation (MS) übermittelten zu verwendenden Strahlformungsvektors als aktuell zur Strahlformung in Abwärtsrichtung der Verbindung verwendeten Strahlformungsvektor indiziert.

18. Basisstation (BS) eines Funk-Kommunikationssystems, mit mehreren Antennen zur Strahlformung in Abwärtsrichtung, die eine Verbindung über eine Funkschnittstelle zu einer Teilnehmerstation (MS) aufweist, umfassend Mittel zum Empfang von Information von der Teilnehmerstation (MS) über mindestens einen zu verwendenden Strahlformungsvektor zur Strahlformung in Abwärtsrichtung der Verbindung, Mittel zum anschließenden Übermitteln von Information an die Teilnehmerstation (MS) über einen verwendeten Strahlformungsvektor zur Strahlformung in Abwärtsrichtung der Verbindung, wobei die Information über den verwendeten Strahlformungsvektor zur Durchführung einer Kanalschätzung durch die Teilnehmerstation (MS) verwendbar ist.

19. Basisstation nach Anspruch 18, wobei die Information über den in Abwärtsrichtung der Verbindung verwendeten Strahlformungsvektor Information über den aktuell in Abwärtsrichtung der Verbindung verwendeten Strahlformungsvektor umfasst.

20. Basisstation nach Anspruch 19, wobei die Information über den zur Strahlformung in Abwärtsrichtung der Verbindung verwendeten Strahlformungsvektor eine Bestätigung eines des mindestens einen von der mindestens einen Teilnehmerstation (MS) übermittelten zu verwendenden Strahlformungsvektors als aktuell zur Strahlformung in Abwärtsrichtung der Verbindung verwendeten Strahlformungsvektor indiziert.

21. Teilnehmerstation (MS) in einem FunkKommunikationssystem, die eine Verbindung über eine Funkschnittstelle zu einer Basisstation (BS) aufweist, umfassend
Mittel zur Übermittlung von Information an die Basisstation (BS) über mindestens einen zur Strahlformung in Abwärtsrichtung der Verbindung zu verwendenden Strahlformungsvektor,
Mittel zum anschließenden Empfang von Information von der Basisstation über einen zur Strahlformung in Abwärtsrichtung der Verbindung verwendeten Strahlformungsvektor, und
Mittel zur Durchführung einer Kanalschätzung auf der Grundlage der Information über den verwendeten Strahlformungsvektor.

22. Teilnehmerstation nach Anspruch 21, wobei die Information über den in Abwärtsrichtung der Verbindung verwendeten Strahlformungsvektor Information über den aktuell in Abwärtsrichtung der Verbindung verwendeten Strahlformungsvektor umfasst.

23. Teilnehmerstation nach Anspruch 22, wobei die Information über den zur Strahlformung in Abwärtsrichtung der Verbindung verwendeten Strahlformungsvektor eine Bestätigung eines des mindestens einen von der mindestens einen Teilnehmerstation (MS) übermittelten zu verwendenden Strahlformungsvektors als aktuell zur Strahlformung in Abwärtsrichtung der Verbindung verwendeten Strahlformungsvektor indiziert.

**Claims**

1. Method for channel estimation in the downlink in a radio communication system,
comprising at least one base station (BS) and at least one subscriber station (MS), between which there is a connection via a radio interface,
wherein at least one beamforming vector to be used for beamforming in the downlink of the connection is ascertained by the at least one subscriber station (MS),
and the at least one subscriber station (MS) transmits information which comprises information about this at least one beamforming vector to be used to the at least one base station (BS),
**characterized in that**
the at least one subscriber station (MS) subsequently receives information from the at least one base station (BS) about the beamforming vector used for beamforming in the downlink of the connection, wherein the information about the beamforming vector used can be used by the at least one subscriber station (MS) to perform channel estimation.

2. Method according to Claim 1, **characterized in that** the information about the beamforming vector used in the downlink of the connection comprises information about the beamforming vector currently used in the downlink of the connection.

3. Method according to Claim 1 or 2, **characterized in that** the information which is transmitted by the at least one subscriber station (MS) to the at least one base station (BS) comprises information relating to the development of the at least one beamforming vector to be used over time.

4. Method according to one of Claims 1 to 3, **characterized in that** the information about the beamforming vector used in the downlink of the connection comprises a pilot sequence for a dedicated channel, which pilot sequence is selected by the at least one base station (BS) from a number of pilot sequences.

5. Method according to Claim 4, **characterized in that** the number of pilot sequences comprises two sequences in antiphase.

6. Method according to one of Claims 1 to 5, **characterized in that** the channel estimation is effected by the at least one subscriber station (MS) using at least one channel transmitted omnidirectionally by the at least one base station (BS).

7. Method according to one of Claims 1 to 6, **characterized in that** the at least one subscriber station (MS), having received the information about the beamforming vector used for beamforming in the downlink of the connection, takes from this information a beamforming vector which is used for the channel estimation in the downlink of the connection.

8. Method according to one of Claims 1 to 7, **characterized in that** the at least one subscriber station (MS), having received the information about the beamforming vector used for beamforming in the downlink of the connection, uses this information to perform calculations for verifying the beamforming vector used.

9. Method according to one of Claims 1 to 8, **characterized in that** the information about the at least one beamforming vector to be used for beamforming in the downlink of the connection and ascertained by the at least one subscriber station (MS) is transmitted by the latter as single bits.

10. Method according to one of Claims 1 to 9, **characterized in that** the information about the beamforming vector used for beamforming in the downlink of the connection is received by the at least one base station (BS) as single bits.

11. Method according to one of Claims 1 to 10, **characterized in that** the information about the beamforming vector used for beamforming in the downlink of the connection verifies the error-free transmission of the information relating to beamforming vectors to be used which is transmitted from the at least one subscriber station (MS) to the at least one base station (BS).

12. Method according to one of Claims 2 to 11, **characterized in that** the information about the beamforming vector used for beamforming in the downlink of the connection indexes confirmation of one of the at least one beamforming vector to be used transmitted by the at least one subscriber station (MS) as the beamforming vector currently used for beamforming in the downlink of the connection.

13. Method according to one of Claims 2 to 12, **characterized in that** the information about the beamforming vector used for beamforming in the downlink of the connection indexes rejection of at least one of the at least one beamforming vector to be used transmitted by the at least one subscriber station (MS) as the beamforming vector currently used for beamforming in the downlink of the connection.

14. Method according to one of Claims 1 to 13, **characterized in that** it is used in a CDMA communication system.

15. Radio communication system comprising at least one base station (BS) and at least one subscriber station (MS), between which there is a connection via a radio interface,
wherein the at least one base station (BS) has a plurality of antennas for beamforming in the downlink of the connection, and wherein the at least one subscriber station (MS) has means for ascertaining at least one beamforming vector to be used for beamforming in the downlink of the connection and means for transmitting information which comprises information about this at least one beamforming vector to be used,
**characterized in that**
the at least one base station (BS) has devices for subsequently transmitting information about the beamforming vector used for beamforming in the downlink of the connection to the at least one subscriber station (MS), and
**in that** the at least one subscriber station (MS) has devices for performing channel estimation using the information transmitted by the at least one base station (BS).

16. Radio communication system according to Claim 15, wherein the information about the beamforming vector used in the downlink of the connection comprises information about the beamforming vector currently used in the downlink of the connection.

17. Radio communication system according to Claim 16, wherein the information about the beamforming vector used for beamforming in the downlink of the connection indexes confirmation of one of the at least one beamforming vector to be used transmitted by the at least one subscriber station (MS) as the beamforming vector currently used for beamforming in the downlink of the connection.

18. Base station (BS) in a radio communication system, having a plurality of antennas for beamforming in the downlink, which has a connection to a subscriber station (MS) via a radio interface, comprising means for receiving information from the subscriber station (MS) about at least one beamforming vector to be used for beamforming in the downlink of the connection, means for subsequently transmitting information to the subscriber station (MS) about a beamforming vector used for beamforming in the downlink of the connection, wherein the information about the beamforming vector used can be used by the subscriber station (MS) to perform channel estimation.

19. Base station according to Claim 18, wherein the information about the beamforming vector used in the downlink of the connection comprises information about the beamforming vector currently used in the downlink of the connection.

20. Base station according to Claim 19, wherein the information about the beamforming vector used for beamforming in the downlink of the connection indexes confirmation of one of the at least one beamforming vector to be used transmitted by the at least one subscriber station (MS) as the beamforming vector currently used for beamforming in the downlink of the connection.

21. Subscriber station (MS) in a radio communication system, which has a connection to the base station (BS) via a radio interface, comprising means for transmitting information to the base station (BS) about at least one beamforming vector to be used for beamforming in the downlink of the connection, means for subsequently receiving information from the base station about a beamforming vector used for beamforming in the downlink of the connection, and
means for performing channel estimation on the basis of the information about the beamforming vector used.

**22.** Subscriber station according to Claim 21, wherein the information about the beamforming vector used in the downlink of the connection comprises information about the beamforming vector currently used in the downlink of the connection.

**23.** Subscriber station according to Claim 22, wherein the information about the beamforming vector used for beamforming in the downlink of the connection indexes confirmation of one of the at least one beamforming vector to be used transmitted by the at least one subscriber station (MS) as the beamforming vector currently used for beamforming in the downlink of the connection.

## Revendications

**1.** Procédé d'estimation de canal dans la direction descendante dans un système de communication radio, comprenant au moins une station de base (BS) et au moins une station d'abonné (MS), entre lesquelles une liaison est établie via une interface radio, dans lequel au moins un vecteur de formation de faisceau à utiliser pour former le faisceau dans la direction de liaison descendante est déterminé par la au moins une station d'abonné (MS), et des informations contenant des données au sujet de ce au moins un vecteur de formation de faisceau à utiliser sont transmises par la au moins une station d'abonné (MS) à la au moins une station de base (BS), **caractérisé en ce que** la au moins une station d'abonné (MS) reçoit ensuite de la au moins une station de base (BS) des informations au sujet du vecteur de formation employé pour former le faisceau dans la direction de liaison descendante, les informations au sujet du vecteur de formation de faisceau employé pouvant être utilisées pour effectuer une estimation de canal par la au moins une station d'abonné (MS).

**2.** Procédé selon la revendication 1, **caractérisé en ce que** les informations au sujet du vecteur de formation de faisceau employé dans la direction de liaison descendante contiennent des informations sur le vecteur de formation de faisceau employé à ce moment dans la direction de liaison descendante.

**3.** Procédé selon la revendication 1 ou 2, **caractérisé en ce que** les informations qui sont transmises par la au moins une station d'abonné (MS) à la au moins une station de base (BS) contiennent des données concernant l'évolution dans le temps du au moins un vecteur de formation de faisceau à utiliser.

**4.** Procédé selon l'une quelconque des revendications 1 à 3, **caractérisé en ce que** les informations au sujet du vecteur de formation de faisceau employé dans la direction de liaison descendante contiennent une séquence pilote d'un canal dédié sélectionnée parmi un certain nombre de séquences pilotes provenant de la au moins une station de base (BS).

**5.** Procédé selon la revendication 4, **caractérisé en ce que** le nombre de séquences pilote comprend deux séquences en opposition de phase.

**6.** Procédé selon l'une quelconque des revendications 1 à 5, **caractérisé en ce que** l'estimation de canal par la au moins une station d'abonné (MS) s'effectue en utilisant au moins un canal transmis dans toutes les directions par la au moins une station de base (BS).

**7.** Procédé selon l'une quelconque des revendications 1 à 6, **caractérisé en ce que** la au moins une station d'abonné (MS), après la réception des informations au sujet du vecteur de formation de faisceau employé pour former le faisceau dans la direction de liaison descendante, extrait à partir de ces informations un vecteur de formation de faisceau utilisé dans la direction de liaison descendante pour l'estimation du canal.

**8.** Procédé selon l'une quelconque des revendications 1 à 7, **caractérisé en ce que** la au moins une station d'abonné (MS), après la réception des informations au sujet du vecteur de formation de faisceau employé pour former le faisceau dans la direction de liaison descendante, exécute, en utilisant ces informations, des calculs de vérification du vecteur de formation de faisceau utilisé.

**9.** Procédé selon l'une quelconque des revendications 1 à 8, **caractérisé en ce que** les informations au sujet du au moins un vecteur de formation de faisceau à utiliser pour former le faisceau dans la direction de liaison descendante, déterminé par la au moins une station d'abonné (MS), sont transmises sous forme de bits individuels par celle-ci.

**10.** Procédé selon l'une quelconque des revendications 1 à 9, **caractérisé en ce que** les informations au sujet du vecteur de formation de faisceau employé pour former le faisceau dans la direction de liaison descendante sont reçues sous forme de bits individuels depuis la au moins une station de base (BS).

**11.** Procédé selon l'une quelconque des revendications 1 à 10, **caractérisé en ce que** les informations au sujet du vecteur de formation de faisceau employé pour former le faisceau dans la direction de liaison descendante vérifient des données concernant la transmission sans défaut des vecteurs de formation de faisceau à utiliser transmis par la au moins une station d'abonné (MS) à la au moins une station de base (BS).

12. Procédé selon l'une quelconque des revendications 2 à 11, **caractérisé en ce que** les informations au sujet du vecteur de formation de faisceau employé pour former le faisceau dans la direction de liaison descendante indiquent une confirmation que le au moins un vecteur de formation de faisceau à utiliser transmis par la au moins une station d'abonné (MS) est employé à ce moment en tant que vecteur de formation de faisceau pour former le faisceau dans la direction de liaison descendante.

13. Procédé selon l'une quelconque des revendications 2 à 12, **caractérisé en ce que** les informations au sujet du vecteur de formation de faisceau employé pour former le faisceau dans la direction de liaison descendante indiquent un refus d'employer un des au moins un vecteur de formation de faisceau à utiliser transmis par la au moins une station d'abonné (MS) en tant que vecteur de formation de faisceau à ce moment pour former le faisceau dans la direction de liaison descendante.

14. Procédé selon l'une quelconque des revendications 1 à 13, **caractérisé en ce qu'**il est utilisé dans un système de communication CDMA.

15. Système de communication radio, comprenant au moins une station de base (BS) et au moins une station d'abonné (MS), entre lesquelles une liaison existe par l'intermédiaire d'une interface radio, dans lequel la au moins une station de base (BS) comprend plusieurs antennes pour former un faisceau dans la direction de liaison descendante, et dans lequel la au moins une station d'abonné (MS) comprend des moyens pour déterminer le au moins un vecteur de formation de faisceau à utiliser pour former le faisceau dans la direction de liaison descendante et des moyens pour transmettre des informations contenant des données au sujet de ce au moins un vecteur de formation de faisceau à utiliser, **caractérisé en ce que** la au moins une station de base (BS) comprend des dispositifs pour transmettre ensuite à la au moins une station d'abonné (MS) des informations au sujet du vecteur de formation de faisceau utilisé pour former le faisceau dans la direction de liaison descendante, et **en ce que** la au moins une station d'abonné (MS) comprend des dispositifs pour exécuter une estimation de canal en se servant des informations transmises par la au moins une station de base (BS).

16. Système de communication selon la revendication 15, dans lequel les informations au sujet du vecteur de formation de faisceau employé dans la direction de liaison descendante contiennent des informations sur le vecteur de formation de faisceau employé à ce moment dans la direction de liaison descendante.

17. Système de communication selon la revendication 16, dans lequel les informations au sujet du vecteur de formation de faisceau employé pour former le faisceau dans la direction de liaison descendante indiquent une confirmation qu'un des au moins un vecteur de formation de faisceau à utiliser transmis par la au moins une station d'abonné (MS) est employé à ce moment en tant que vecteur de formation de faisceau pour former le faisceau dans la direction de liaison descendante.

18. Station de base (BS) d'un système de communication radio, comportant plusieurs antennes pour former un faisceau en direction descendante, qui possède une liaison vers une station d'abonné (MS) par l'intermédiaire d'une interface radio, et comprenant des moyens de réception d'informations provenant de la station d'abonné (MS) au sujet du au moins un vecteur de formation de faisceau à utiliser pour former le faisceau dans la direction de liaison descendante, des moyens pour transmettre ensuite à la au moins une station d'abonné (MS) des informations au sujet du vecteur de formation de faisceau utilisé pour former le faisceau dans la direction de liaison descendante, dans lequel les informations au sujet du vecteur de formation de faisceau employé peuvent être utilisées pour exécuter une estimation de canal par la station d'abonné (MS).

19. Station de base selon la revendication 18, dans laquelle les informations au sujet du vecteur de formation de faisceau employé dans la direction de liaison descendante contiennent des données sur le vecteur de formation de faisceau employé à ce moment dans la direction de liaison descendante.

20. Station de base selon la revendication 19, dans laquelle les informations au sujet du vecteur de formation de faisceau employé pour former le faisceau dans la direction de liaison descendante indiquent une confirmation qu'un des au moins un vecteur de formation de faisceau à utiliser transmis par la au moins une station d'abonné (MS) est employé à ce moment en tant que vecteur de formation de faisceau pour former le faisceau dans la direction de liaison descendante.

21. Station d'abonné (MS) dans un système de communication radio, qui possède une liaison vers une station de base (BS) par l'intermédiaire d'une interface radio, comprenant

des moyens de transmission à la au moins une station de base (BS) d'informations au sujet d'au moins un vecteur de formation de faisceau à utiliser pour former le faisceau dans la direction de liaison descendante,

des moyens de réception suivante d'informations provenant de la station de base (BS) au sujet d'un vecteur de formation de faisceau utilisé pour former le faisceau dans la direction de liaison descendante, et

des moyens pour exécuter une estimation de canal sur la base des informations au sujet du vecteur de formation de faisceau utilisé.

**22.** Station d'abonné selon la revendication 21, dans laquelle les informations au sujet du vecteur de formation de faisceau employé dans la direction de liaison descendante contiennent des informations sur le vecteur de formation de faisceau employé à ce moment dans la direction de liaison descendante.

**23.** Station d'abonné selon la revendication 22, dans laquelle les informations au sujet du vecteur de formation de faisceau employé pour former le faisceau dans la direction de liaison descendante indiquent une confirmation qu'un des au moins un vecteur de formation de faisceau à utiliser transmis par la au moins une station d'abonné (MS) est utilisé à ce moment en tant que vecteur de formation de faisceau pour former le faisceau dans la direction de liaison descendante.

## FIG 1

BS

MS

CPICH

- MESSUNG
- AUSWAHL STRAHL-FORMUNGSVEKTOR

STRAHLFORMUNGSVEKTOR

- STRAHLFORMUNG

DPCH BESTÄTIGUNG

- BERECHNUNG ZUR VERIFIKATION DES STRAHLFORMUNGS-VEKTORS

## FIG 2

BS

MS

CPICH

- MESSUNG
- AUSWAHL STRAHL-FORMUNGSVEKTOR

STRAHLFORMUNGSVEKTOR

- ENTSCHEIDUNG STRAHL-FORMUNGSVEKTOR
- STRAHLFORMUNG

DPCH ABLEHNUNG

- ANNAHME STRAHL-FORMUNGSVEKTOR

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10026077

**In der Beschreibung aufgeführte Nicht-Patentliteratur**

- *3GGP TR 25.869,* Juni 2001

- *3GGP TS 25.214,* September 2000